# EUROPÄISCHE PATENTSCHRIFT

(11) **EP 4 021 869 B1**
(45) Veröffentlichungstag und Bekanntmachung des Hinweises auf die Patenterteilung: **13.08.2025**
(21) Anmeldenummer: 20820109.5
(22) Anmeldetag: 03.12.2020
(51) Int. Cl.: C04B 37/02

(54) **VERFAHREN ZUR HERSTELLUNG EINES METALL-KERAMIK-SUBSTRATS UND METALL-KERAMIK-SUBSTRAT, HERGESTELLT MIT EINEM SOLCHEN VERFAHREN**
METHOD FOR PRODUCING A METAL-CERAMIC SUBSTRATE, AND METAL-CERAMIC SUBSTRATE PRODUCED USING SUCH A METHOD
PROCÉDÉ DE FABRICATION D'UN SUBSTRAT MÉTAL-CÉRAMIQUE, ET SUBSTRAT MÉTAL-CÉRAMIQUE FABRIQUÉ PAR UN TEL PROCÉDÉ

(30) Priorität: 19.12.2019 DE 102019135099
(43) Veröffentlichungstag der Anmeldung: 06.07.2022
(73) Patentinhaber: Rogers Germany GmbH, 92676 Eschenbach (DE)
(72) Erfinder: SCHMIDT, Karsten, 92676 Eschenbach (DE); WELKER, Tilo, 91284 Neuhaus (DE); BRITTING, Stefan, 91220 Schnaittach (DE)
(74) Vertreter: Müller Schupfner & Partner Patent- und Rechtsanwaltspartnerschaft mbB (Muc)
(86) Internationale Anmeldenummer: PCT/EP2020/084468
(87) Internationale Veröffentlichungsnummer: WO 2021/122035

(56) Entgegenhaltungen:
- JP-A- 2019 085 327
- JP-A- S61 296 955
- US-A1- 2017 044 072

## Beschreibung

Die vorliegende Erfindung betrifft ein Verfahren zur Herstellung eines Metall-Keramik-Substrats und ein Metall-Keramik-Substrat, hergestellt mit einem solchen Verfahren.

Metall-Keramik-Substrate sind beispielsweise als Leiterplatten oder Platinen aus dem Stand der Technik hinlänglich bekannt, beispielsweise aus der DE 10 2013 104 739 A1, der DE 19 927 046 B4 und der DE 10 2009 033 029 A1. Typischerweise werden auf einer Bauteilseite des Metall-Keramik-Substrats Anschlussflächen für elektrische Bauteile und Leiterbahnen angeordnet, wobei die elektrischen Bauteile und die Leiterbahnen zu elektrischen Schaltkreisen zusammenschaltbar sind. Wesentliche Bestandteile der Metall-Keramik-Substrate sind eine Isolationsschicht, die bevorzugt aus einer Keramik gefertigt ist, und wenigstens eine an die Isolationsschicht angebundene Metallschicht. Wegen ihrer vergleichsweise hohen Isolationsfestigkeiten haben sich aus Keramik gefertigte Isolationsschichten in der Leistungselektronik als besonders vorteilhaft erwiesen. Durch eine Strukturierung der Metallschicht können sodann Leiterbahnen und/oder Anschlussflächen für die elektrischen Bauteile realisiert werden.

Aus der US 2017 044072 A1 und JP 2019 085 327 A sind Verfahren zur Herstellung von Metall-Keramiken bekannt. Dabei wird für die Bindung einer Kupferschicht sowohl eine Benetzungsschicht als auch eine Aktivmetallschicht vorgesehen. Wenn die Kupferschicht mit einer Aluminiumschicht kombiniert wird, wird allerdings nur die Benetzungsschicht verwendet.

Voraussetzung für das Bereitstellen eines solchen Metall-Keramik-Substrats ist eine dauerhafte Anbindung der Metallschicht an die Keramikschicht. Neben einem sogenannten Direktanbindungsverfahren, d. h. DCB- oder DAB-Verfahren, ist es aus dem Stand der Technik bekannt, die Metallschicht über ein Lotmaterial an die Keramikschicht anzubinden.

Typischerweise werden Metall-Keramik-Substrate bereitgestellt, deren Vorderseitenmetallisierung und Rückseitenmetallisierung bezüglich des Metallmaterials identisch sind, beispielsweise jeweils aus Kupfer gefertigt sind. Eine Anbindung unterschiedlicher Metalle ist dabei in der Regel unmöglich, da die Prozess-Temperuren dies nicht gestatten. Ein sequentielles Fügen wird aufgrund der unterschiedlichen Ausdehnungskoeffizienten von Metall und Keramik erschwert.

Ausgehend von diesem Stand der Technik macht es sich die vorliegende Erfindung zur Aufgabe, ein verbessertes Verfahren zur Anbindung der Metallschicht an die Keramikschicht bereitzustellen, insbesondere zur Anbindung einer ersten Metallschicht und einer zweiten Metallschicht an die Keramikschicht, wobei sich die erste Metallschicht und die zweite Metallschicht in Hinblick auf ihre Materialzusammensetzung voneinander unterscheiden.

Diese Aufgabe wird durch ein Verfahren zur Herstellung eines Metall-Keramik-Substrats gemäß Anspruch 1 und ein Metall-Keramik-Substrat hergestellt mit einem solchen Verfahren gemäß Anspruch 10 gelöst. Weitere Vorteile und Eigenschaften ergeben sich aus den Unteransprüchen sowie der Beschreibung und den beigefügten Figuren.

Gemäß einem ersten Aspekt der vorliegenden Erfindung ist ein Verfahren zur Herstellung eines Metall-Keramik-Substrats vorgesehen, bei dem mindestens eine erste Metallschicht, ein Keramikelement und mindestens eine zweite Metallschicht entlang einer Stapelrichtung übereinander angeordnet sind, wobei das Keramikelement in Stapelrichtung zwischen der mindestens einen ersten Metallschicht und der mindestens einen zweiten Metallschicht angeordnet ist und wobei sich die mindestens eine erste Metallschicht von der mindestens einen zweiten Metallschicht unterscheidet, umfassend:
- Bereitstellen des Keramikelements;
- Ausbilden einer ersten Schnittstellenmetallisierung auf einer ersten Seite des Keramikelements, wobei die erste Schnittstellenmetallisierung eine erste Aktivmetallschicht und eine erste Benetzungsmetallschicht umfasst,
- Ausbilden einer zweiten Schnittstellenmetallisierung auf einer der ersten Seite des Keramikelements gegenüberliegenden, zweiten Seite des Keramikelements, wobei die zweite Schnittstellenmetallisierung eine zweite Aktivmetallschicht und eine zweite Benetzungsmetallschicht umfasst,
- Anbinden der mindestens einen ersten Metallschicht an die erste Schnittstellenmetallisierung, insbesondere mittels eines Aktivlötverfahrens, zur Ausbildung des Metall-Keramik-Substrats, und
- Anbinden der mindestens einen zweiten Metallschicht an die zweite Schnittstellenmetallisierung, insbesondere mittels eines Aktivlötverfahrens,
wobei die erste Schnittstellenmetallisierung, insbesondere die erste Aktivmetallschicht und/oder die erste Benetzungsmetallschicht, und/oder die zweite Schnittstellenmetallisierung, insbesondere die zweite Aktivmetallschicht und/oder die zweite Benetzungsmetallschicht, einem Energieeintrag ausgesetzt wird, insbesondere zeitlich vor dem Anbinden der mindestens einen ersten Metallschicht an die erste Schnittstellenmetallisierung und der mindestens einen zweiten Metallschicht an die zweite Schnittstellenmetallisierung.

Gegenüber den aus dem Stand der Technik vorgesehenen Verfahren ist es erfindungsgemäß vorgesehen, dass an einer ersten Seite des Keramikelements eine erste Schnittstellenmetallisierung und an einer der ersten Seite gegenüberliegenden, zweiten Seite des Keramikelements eine zweite Schnittstellenmetallisierung vorgesehen ist. Dabei dient die erste Schnittstellenmetallisierung und/oder die zweite Schnittstellenmetallisierung dazu, eine Art Adapter oder Fügeschicht zur Anbindung der mindestens einen ersten Metallschicht oder der mindestens einen zweiten Metallschicht am Keramikelement bereitzustellen. Dadurch ist es in vorteilhafter Weise möglich, den Lötprozess, über den die mindestens eine erste Metallschicht an die erste Schnittstellenmetallisierung bzw. die mindestens eine zweite Metallschicht an die zweite Schnittstellenmetallisierung angebunden wird, entsprechend anzupassen, sodass beispielsweise Lotmaterialien verwendet werden können, die bei einer vergleichbaren oder identischen Löttemperatur insbesondere auf beiden Seiten gleichzeitig zu einer stoffschlüssigen Verbindung führen. Insbesondere ist es vorstellbar, derartige Lötmaterialien zu verwenden, die eine vergleichsweise niedrige thermische Belastung für das herzustellende Metall-Keramik-Substrat verursachen, um so entsprechende thermomechanisch induzierte Spannungen bereits während des Fertigungsprozesses im Metall-Keramik-Substrat zu vermeiden, die andernfalls die Lebensdauer des gefertigten Metall-Keramik-Substrats reduzieren könnten.

Zudem ist es möglich, mittels der ersten Schnittstellenmetallisierung und der zweiten Schnittstellenmetallisierung bei der Materialwahl der mindestens einen ersten Metallschicht und der mindestens einen zweiten Metallschicht freier zu sein, sodass beispielsweise als Rückseitenmetallisierung, d. h. als mindestens eine zweite Metallschicht, beispielsweise Aluminium verwendet werden kann, während als mindestens eine erste Metallschicht bzw. Vorderseitenmetallisierung eine Kupferschicht verwendet werden kann. Dadurch lassen sich Kosten und/oder Gewicht vom zu fertigenden Metall-Keramik-Substrat reduzieren. Vorzugsweise umfasst das Keramikelement zumindest eine Keramikschicht. Bevorzugt weist das Keramikelement mindestens zwei Keramikschichten auf, zwischen denen eine metallische Zwischenlage vorgesehen, die zwecks Wärmespreizung eine Dicke aufweist, die größer ist als 1,4 mm, oder die unterschiedlich sind, um eine Hybridkeramik bereitzustellen.

Vorzugsweise handelt es sich bei dem Metall-Keramik-Substrat um eine Leiterplatte bzw. ein printed circuit board (PCB). Beispielsweise wird das Verfahren zur Ausbildung von Großkarten herangezogen, wobei aus der Großkarte im Anschluss in einem Vereinzelungsprozess mehrere vereinzelte Metall-Keramik-Substrate gebildet werden. Insbesondere ist es dabei vorgesehen, dass nach dem Anbinden der mindestens einen ersten Metallschicht an die erste Schnittstellenmetallisierung bzw. nach dem Anbinden der mindestens einen zweiten Metallschicht an die zweite Schnittstellenmetallisierung - beispielsweise durch ein Ätzen, insbesondere ein mehrstufiges Ätzen, und/oder ein Fräsen - eine Strukturierung in der mindestens einen ersten Metallschicht und/oder mindestens einen zweiten Metallschicht vorgenommen wird. Dadurch lassen sich beispielsweise Leiterbahnen und/oder Anschlüsse in der mindestens einen ersten Metallschicht erzeugen. Es ist auch vorstellbar, dass in der mindestens einen zweiten Metallschicht eine Strukturierung, beispielsweise in Form von Finnen, realisiert wird, die Teil einer Kühlstruktur sind oder die Kühlstruktur bilden, an der wiederum während des Betriebs des Metall-Keramik-Substrats ein Kühlfluid entlang geführt wird, um entsprechende Wärme, die in Betrieb von Bauteilen auf der mindestens einen ersten Metallschicht erzeugt wird, abzuführen.

Insbesondere unterscheiden sich die erste bzw. zweite Aktivmetallschicht und die erste bzw. zweite Benetzungsmetallschicht in Hinblick auf ihre Materialwahl. Beispielsweise handelt es sich bei dem Material für die erste bzw. zweite Aktivmetallschicht um Ti, Zr, Hf, Cr, Nb und/oder V und vorzugsweise bei der erste bzw. zweite Benetzungsmetallschicht um Cu, Ag, Ni, In und/oder ähnliche Metalle. Denkbar ist auch, dass als erste bzw. zweite Benetzungsmetallschicht ein Kupferoxid verwendet wird, insbesondere wenn die erste bzw. zweite Aktivmetallschicht in einer Prozessgasatmosphäre unter Aufwendung eines Energieeintrags und/oder weiteren Energieeintrags an die mindestens eine Keramikschicht angebunden wurde. Weiterhin ist es vorgesehen, dass die erste bzw. zweite Benetzungsmetallschicht unmittelbar an die erste bzw. zweite Aktivmetallschicht in Stapelrichtung gesehen angrenzt. Weiterhin ist es vorstellbar, dass sich die erste bzw. zweite Benetzungsmetallschicht und/oder erste bzw. zweite Aktivmetallschicht an der Oberseite unterscheidet von der erste bzw. zweite Benetzungsmetallschicht und/oder erste bzw. zweite Aktivmetallschicht an der Unterseite des Keramikelements.

Ferner umfasst das Metall-Keramik-Substrat mindestens eine erste Metallschicht, die an einer Oberseite des Keramikelements stoffschlüssig angebunden ist, und mindestens eine zweite Metallschicht, die an einer Unterseite des Keramikelements stoffschlüssig angebunden ist, wobei sich die mindestens eine erste Metallschicht, die mindestens eine zweite Metallschicht und das Keramikelement entlang einer Haupterstreckungsebene erstrecken und entlang einer senkrecht zur Haupterstreckungsebene verlaufenden Stapelrichtung übereinander angeordnet sind. Als Materialien für die mindestens eine erste Metallschicht bzw. die mindestens zweite Metallschicht sind Kupfer, Aluminium, Molybdän und/oder deren Legierungen, sowie Laminate wie CuW, CuMo, CuAl, AlCu und/oder CuCu vorstellbar, insbesondere eine Kupfer-Sandwichstruktur mit einer ersten Kupferschicht und einer zweiten Kupferschicht, wobei sich eine Korngröße in der ersten Kupferschicht von einer zweiten Kupferschicht unterscheidet. Weiterhin ist bevorzugt vorgesehen, dass die mindestens eine Metallschicht oberflächenmodifiziert ist. Als Oberflächenmodifikation ist beispielsweise eine Versiegelung mit einem Edelmetall, insbesondere Silber und/oder Gold, oder ENIG ("*electroless nickel immersion gold*") oder ein Kantenverguss an der mindestens einen ersten bzw. zweiten Metallsschicht zur Unterdrückung einer Rissbildung bzw. -weitung denkbar.

Vorzugsweise weist das eine Keramikelement Al₂O₃, Si₃N₄, AIN, eine HPSX-Keramik (d. h. eine Keramik mit einer Al₂O₃- Matrix, die einen x-prozentigen Anteil an ZrO₂ umfasst, beispielsweise Al₂O₃ mit 9% ZrO₂ = HPS9 oder Al₂O₃ mit 25% ZrO₂ = HPS25), SiC, BeO, MgO, hochdichtes MgO (> 90% der theoretischen Dichte), TSZ (tetragonal stabilisiertes Zirkonoxid) oder ZTA als Material für die Keramik auf. Es ist dabei auch vorstellbar, dass das Keramikelement als Verbund- bzw. Hybridkeramik ausgebildet ist, bei der zur Kombination verschiedener gewünschter Eigenschaften mehrere Keramikschichten, die sich jeweils in Hinblick auf ihre materielle Zusammensetzung unterscheiden, übereinander angeordnet und zu einer Isolationsschicht zusammengefügt sind. Vorzugsweise wird eine möglichst wärmeleitfähige Keramik für einen möglichst geringen Wärmwiderstand verwendet.

Weiterhin ist es vorstellbar, dass im Keramikelement neben der mindestens einen Keramikschicht mindestens eine weitere Keramikschicht vorgesehen ist, wobei zwischen der mindestens einen Keramikschicht und der mindestens einen weiteren Keramikschicht eine metallische Zwischenschicht angeordnet ist, wobei die metallische Zwischenschicht vorzugsweise dicker als 1,4 mm ist und/oder dicker als die mindestens eine Keramikschicht und die mindestens eine weitere Keramikschicht.

Dabei wird vorzugsweise die Metallschicht an die Keramikschicht mittels eines AMB-Verfahrens und/oder ein DCB-Verfahren stoffschlüssig angebunden.

Unter einem "DCB-Verfahren" (Direct-Copper-Bond-Technology) oder einem "DAB-Verfahren" (Direct-Aluminium-Bond-Technology) versteht der Fachmann ein solches Verfahren, das beispielsweise zum Verbinden von Metallschichten oder - blechen (z. B. Kupferblechen oder -folien oder Aluminiumblechen oder -folien) miteinander und/oder mit Keramik oder Keramikschichten dient, und zwar unter Verwendung von Metall- bzw. Kupferblechen oder Metall- bzw. Kupferfolien, die an ihren Oberflächenseiten eine Schicht oder einen Überzug (Aufschmelzschicht), aufweisen. Bei diesem beispielsweise in der US 3 744 120 A oder in der DE23 19 854 C2 beschriebenen Verfahren bildet diese Schicht oder dieser Überzug (Aufschmelzschicht) ein Eutektikum mit einer Schmelztemperatur unter der Schmelztemperatur des Metalls (z. B. Kupfers), so dass durch Auflegen der Folie auf die Keramik und durch Erhitzen sämtlicher Schichten diese miteinander verbunden werden können, und zwar durch Aufschmelzen des Metalls bzw. Kupfers im Wesentlichen nur im Bereich der Aufschmelzschicht bzw. Oxidschicht.

Insbesondere weist das DCB-Verfahren dann z. B. folgende Verfahrensschritte auf:
- Oxidieren einer Kupferfolie derart, dass sich eine gleichmäßige Kupferoxidschicht ergibt;
- Auflegen des Kupferfolie auf die Keramikschicht;
- Erhitzen des Verbundes auf eine Prozesstemperatur zwischen etwa 1025 bis 1083°C, z. B. auf ca. 1071°C;
- Abkühlen auf Raumtemperatur.

Unter einem Aktivlot-Verfahren z. B. zum Verbinden von Metallschichten oder Metallfolien, insbesondere auch von Kupferschichten oder Kupferfolien mit Keramikmaterial ist ein Verfahren zu verstehen, welches speziell auch zum Herstellen von Metall-Keramik-Substraten verwendet wird, wird bei einer Temperatur zwischen ca.650-1000°C eine Verbindung zwischen einer Metallfolie, beispielsweise Kupferfolie, und einem Keramiksubstrat, beispielsweise Aluminiumnitrid-Keramik, unter Verwendung eines Hartlots hergestellt, welches zusätzlich zu einer Hauptkomponente wie Kupfer, Silber und/oder Gold auch ein Aktivmetall enthält. Dieses Aktivmetall, welches beispielsweise wenigstens ein Element der Gruppe Hf, Ti, Zr, Nb, Ce ist, stellt durch chemische Reaktion eine Verbindung zwischen dem Lot und der Keramik her, während die Verbindung zwischen dem Lot und dem Metall eine metallische Hartlöt-Verbindung ist. Alternativ ist zur Anbindung auch ein Dickschichtverfahren vorstellbar.

Insbesondere handelt es sich bei dem Lotmaterial, vorzugsweise um ein silberbasiertes oder ein kupferbasiertes Lotmaterial. In einem silberbasierten Lotmaterial ist Silber die Hauptkomponente, d. h. der Bestandteil mit dem bezüglich der Gewichtsprozente höchsten Anteil, während in einem kupferbasierten Lotmaterial Kupfer die Hauptkomponente ist. Beispiele für ein silberbasiertes Lotmaterial sind AgCu, insbesondere AgCu28, AgCuln, AgCuSn und AgCuGa. Beispiele für ein kupferbasiertes Basismaterial sind Kupfer CuSn, Culn, CuGa, CuInSn, CuInMb, CuGaSn. Auch ist es vorstellbar als Basismaterial NiCrMn, Sn, SnSb oder SnCu zu verwenden.

Gemäß einer bevorzugten Ausführungsform ist es vorgesehen, dass das Anbinden der mindestens einen ersten Metallschicht und das Anbinden der mindestens einen zweiten Metallschicht zeitgleich durchgeführt wird bzw. zumindest abschnittweise zeitgleich durchgeführt wird. Dadurch lässt sich in vorteilhafterweise simultan eine Anbindung der mindestens einen ersten Metallschicht bzw. der mindestens einen zweiten Metallschicht an das Keramikelement realisieren. Entsprechend wird das zu fertigende Metall-Keramik-Substrat nicht unnötig langen Temperaturbehandlungen ausgesetzt, die erforderlich sind, um die mindestens eine erste Metallschicht und die mindestens eine zweite Metallschicht an das Keramikelement anzubinden. Ferner lässt sich im Rahmen der Fertigung des Metall-Keramik-Substrats in vorteilhafter Weise Zeit und Energie einsparen und der Fertigungsprozess wird somit beschleunigt.

Weiterhin ist es bevorzugt vorgesehen, dass das Keramikelement mindestens eine Keramikschicht und/oder mindestens einen eine Keramikschicht aufweisenden Verbund umfasst. Beispielsweise ist es vorstellbar, dass das Keramikelement mindestens zwei Keramikschichten umfasst, zwischen denen eine metallische Zwischenschicht angeordnet ist, wobei die metallische Zwischenschicht größer ist als 1,4 mm und/oder dicker ist als eine Schichtdicke der jeweiligen Keramikschichten des Verbunds. Dadurch lässt sich zwischen den beiden Keramikschichten eine Zwischenmetallschicht realisieren, die bereits zu einer Wärmespreizung beitragen kann, um somit den Wärmeabtransport zu unterstützen bzw. zu verbessern.

Weiterhin ist es bevorzugt vorgesehen, dass das Anbinden der mindestens einen ersten Metallschicht und der mindestens einen zweiten Metallschicht unterhalb einer Löttemperatur von 800 °C, bevorzugt unterhalb von 700 °C und besonders bevorzugt unterhalb von 650 °C durchgeführt wird. Bevorzugt sind Löttemperaturen zwischen 230°C und 650 °C vorgesehen. Insbesondere im Vergleich zu den Temperaturen, die im Rahmen eines üblicherweise verwendeten Direktmetallverbindungsverfahren, beispielsweise einem DCB- oder DAB-Verfahren verwendet werden, oder bei einem Lötverfahren, bei dem die mindestens eine erste Metallschicht und/oder die mindestens eine zweite Metallschicht direkt an das mindestens eine Keramikelement angebunden wird, lassen sich so während der Fertigung des Metall-Keramik-Substrats Löttemperaturen verwenden, die kleiner sind als die der üblicherweise verwendeten Lötmaterialen oder Prozesstemperaturen. Dies erweist sich insbesondere deswegen als vorteilhaft, da im Rahmen der Fertigung Ausdehnungen der einzelnen Schichten dazu führen, dass im gefertigten Metall-Keramik-Substrat thermomechanische Spannungen bzw. mechanische Spannungen existieren, die nachteilig sind für die Lebensdauer des gefertigten Metall-Keramik-Substrats. Außerdem lässt sich der Energieaufwand im Rahmen der Herstellung reduzieren.

Zweckmäßigerweise ist vorgesehen, dass die mindestens eine erste Metallschicht und/oder die mindestens eine zweite Metallschicht eine Hybridstruktur und/oder eine Oberflächenmodifikation aufweist. Dadurch lassen sich mit Vorteil die Anbindungseigenschaften der mindestens einen ersten bzw. zweiten Metallschicht weiter verbessern. Beispielsweise umfasst die mindestens eine erste Metallschicht hierzu einen zweiten Teilabschnitt, der gegenüber einem ersten Teilabschnitt der mindestens einen ersten Metallschicht dünner ist und insbesondere eine niedrigere Schmelztemperatur aufweist. Über den zweiten Teilabschnitt erfolgt dann die Bindung an die erste Seite der ersten Schnittstellenmetallisierung. Beispielsweise ist der erste Teilabschnitt aus einer Metalllegierung eines Metalls, aus dem der zweite Teilabschnitt der ersten Metallschicht geformt ist. Es ist auch vorstellbar, dass der erste Teilabschnitt und der zweite Teilabschnitt, beispielsweise der mindestens einen zweiten Metallschicht, plattiert oder der erste bzw. zweite Teilabschnitt oberflächenmodifiziert werden, um eine Hybridstruktur zu bilden. Beispielsweise ist für die mindestens eine zweite Metallschicht eine der zweiten Seite zugewandte Schicht aus AlSi vorstellbar, die eine Anbindung der mindestens einen zweiten Metallschicht an das Keramikelement vereinfacht.

Vorzugsweise ist es vorgesehen, dass
- ein zumindest abschnittsweise primäres Anordnen der ersten Aktivmetallschicht und/oder der zweiten Aktivmetallschicht und/oder
- ein zumindest abschnittsweise sekundäres Anordnen der ersten Benetzungsmetallschicht auf der Aktivmetallschicht und/oder der zweiten Benetzungsmetallschicht auf der zweiten Aktivmetallschicht mittels eines Abscheideverfahrens durchgeführt wird,
wobei zwischen dem primären Anordnen und dem sekundären Anordnen die erste Aktivmetallschicht und/oder die zweite Aktivmetallschicht einem weiteren Energieeintrag ausgesetzt wird. Insbesondere hat es sich als vorteilhaft herausgestellt, mittels eines Energieeintrags und/oder eines weiteren Energieeintrags die erste Schnittstellenmetallisierung und/oder zweite Schnittstellenmetallisierung zu realisieren. Insbesondere nutzt man dabei, dass durch eine vergleichsweise dünne Ausgestaltung der ersten Aktivmetallschicht, der zweiten Aktivmetallschicht, der ersten Benetzungsmetallschicht und/oder der zweiten Benetzungsmetallschicht es möglich ist, im Rahmen eines gezielten Energieeintrags eine Schmelze der Metalle zu veranlassen, die eine stoffschlüssige Verbindung zu der ersten und/oder zweiten Seite des Keramikelements bewirkt. Durch ein sukzessives Nutzen eines Energieeintrags bzw. eines weiteren Energieeintrags kann jeweils der verwendete Leistungsanteil des ersten Energieeintrags und des weiteren Energieeintrags möglichst gering gehalten werden, wodurch die jeweilige Belastung des zu fertigende Metall-Keramik-Substrats möglichst klein gehalten wird.

Vorzugsweise ist es vorgesehen, dass als Energieeintrag oder weiterer Energieeintrag Licht verwendet wird. Beispielsweise wird Laserlicht verwendet, das gezielt auf die erste Aktivmetallschicht, die zweite Aktivmetallschicht, die erste Benetzungsmetallschicht oder die zweite Benetzungsmetallschicht gerichtet ist. Vorzugsweise ist es vorgesehen, dass ein Lichtblitz verwendet wird, wobei der Energieeintrag des Lichtblitzes auf die Aktivmetallschicht und/oder die Benetzungsmetallschicht vorzugsweise mindestens 5 kW, bevorzugt mindestens 8 kW und besonders bevorzugt zwischen 10 kW und 15 kW beträgt. Insbesondere erfolgt der Energieeintrag im Rahmen eines sogenannten "Flashlight-Annealings", bei dem ein Lichtblitz flächendeckend über 0,6 ms bis 20 ms hinweg die Aktivmetallschicht und/oder Benetzungsmetallschicht beleuchtet. So werden die Aktivmetallschicht und/oder die Benetzungsmetallschicht flächendeckend einem kurzen thermischen Schock, beispielsweise im Form einer kurzfristigen Erwärmung um 800 °C, ausgesetzt. Dabei werden vorzugsweise solche Lichtblitze verwendet, deren Energiedichte zwischen 0,01 J/cm² und 100 J/cm², bevorzugt zwischen 0,5 J/cm² und 15 J/cm² liegt und/oder deren Pulsdauer zwischen 0,2 ms und 20 ms betragen. Es hat sich herausgestellt, dass durch die Behandlung mit derartigen Lichtblitzen die Ausbildung einer beschriebenen Schnittstellenmetallisierung im Rahmen eines Präparationsschrittes vor dem eigentlichen Anbinden der mindestens einen Metallschicht und/oder einer mindestens einen weiteren Metallschicht möglich ist. Beispielsweise veranlasst der Energieeintrag durch einen entsprechenden Lichtblitz bei dem Aktivmetall die Reaktion

Si₃N₄ + Ti **→** TiN + Ti₃Si₅.

Alternativ und/oder ergänzend ist es vorgesehen, dass der Energieeintrag und/oder weitere Energieeintrag ein Sintern bzw. Temperieren umfasst, d. h. vorzugsweise wird bzw. werden die Aktivmetallschicht und/oder die Benetzungsmetallschicht, insbesondere unter inerten Bedingungen, erhitzt bzw. erwärmt. Denkbar ist, dass das Erwärmen im Vakuum oder in einer Schutzgasatmosphäre durchgeführt wird. Es ist auch vorstellbar, dass der Energieeintrag über eine induktive Wirkung veranlasst wird. Ferner ist es denkbar, dass die Aktivmetallschicht und/oder die Benetzungsmetallschicht während des Energieeintrags bzw. des weiteren Energieeintrags unter Druck gesetzt sind, d. h. zusammengepresst sind.

Vorzugsweise ist es vorgesehen, dass das primäre Anordnen und/oder das sekundäre Anordnen mittels eines Abscheidungsverfahrens, insbesondere mittels eines physikalischen Gasabscheidungsverfahrens realisiert wird. Beispielsweise handelt es sich um ein DC-Sputtern und/oder reaktives Sputtern. Dadurch lassen sich gezielt vergleichsweise dünne erste bzw. zweite Aktivmetallschichten und/oder erste bzw. zweite Benetzungsmetallschichten realisieren, was sich wiederrum positiv auf den erforderlichen Energieeintrag auswirkt, der benötigt wird, um zumindest die erste bzw. zweite Aktivmetallschicht an die das Keramikelement anzubinden. Ferner ist es bevorzugt vorgesehen, dass beispielsweise im Rahmen eines Abscheidungsvorgangs mittels einer entsprechenden Maskierung eine Strukturierung für die erste bzw. zweite Schnittstellenmetallisierung bzw. zumindest für die erste bzw. zweite Aktivmetallschicht und/oder die erste bzw. zweite Benetzungsmetallschicht vorgenommen wird. Eine derartige Strukturierung in der ersten Schnittstellenmetallisierung, die vorzugsweise der geplanten Strukturierung in der mindestens ersten Metallschicht entspricht, verhindert mit Vorteil im Bereich der geplanten Strukturierung eine Anbindung der mindestens einen ersten Metallschicht an das Keramikelement, wodurch der zur finalen Strukturierung vorgesehene Ätzschritt, das sogenannte "second etching", vereinfacht werden kann, d. h. bei dem Ätzschritt, der die Isolationsgräben zwischen einzelnen Metallabschnitten der mindestens einen Metallschicht realisiert. Ferner ist es vorstellbar, dass die erste bzw. zweite Aktivmetallschicht und/oder erste bzw. zweite Benetzungsmetallschicht galvanisch bzw. elektrochemisch bzw. stromlos nasschemisch realisiert werden, vorzugsweise bei Cr als Aktivmetall.

In einer weiteren bevorzugten Ausführungsform ist es vorgesehen, dass die erste Aktivmetallschicht eine erste Dicke und die erste Benetzungsmetallschicht eine zweite Dicke aufweist, wobei die erste Dicke und/oder die zweite Dicke einen Wert zwischen 0 nm oder 10 nm und 5000 nm, bevorzugt zwischen 50 nm und 2.500 nm und besonders bevorzugt zwischen 100 nm und 1000 nm annimmt. Insbesondere ist besonders bevorzugt vorgesehen, dass die erste Dicke im Wesentlichen der zweiten Dicke entspricht. Es ist aber auch vorstellbar, dass die zweite Dicke um einen Faktor bis zu fünfmal größer ist als die erste Dicke. Dabei ist insbesondere unter "im Wesentlichen gleich" zu verstehen, dass sich die Werte innerhalb einer Toleranz von 50%, vorzugsweise 30 % oder besonders bevorzugt 10 %, gleichen bzw. einander entsprechen. Durch eine entsprechende Dimensionierung der ersten Aktivmetallschicht und/oder der ersten Benetzungsmetallschicht ist es in vorteilhafter Weise möglich, ein Schichtsystem dazu bereitzustellen, dass vergleichsweise einfach mit einem entsprechenden Energieeintrag aufschmelzbar ist, um so die stoffschlüssige Verbindung zur Anbindung der ersten Schnittstellenmetallisierung an das Keramikelement zu realisieren. Insbesondere gelten die obigen Verhältnisse für die erste und zweite Dicke auch für die zweite Aktivmetallschicht und die zweite Benetzungsmetallschicht analog.

Weiterhin ist es besonders bevorzugt vorgesehen, dass sich die erste Benetzungsmetallschicht und die zweite Benetzungsmetallschicht voneinander unterscheiden, insbesondere in Hinblick auf das Metallmaterial. Dadurch ist es möglich, weiter Einfluss zu nehmen auf das zu verwendende Lotmaterial im Rahmen des Anbindungsprozesses zwischen der mindestens einen ersten Metallschicht an der erste Schnittstellenmetallisierung und der Anbindung der mindestens einen zweiten Metallschicht an der zweite Schnittstellenmetallisierung.

Vorzugsweise ist es vorgesehen, dass zur Ausbildung der ersten Schnittstellenmetallisierung und/oder der zweiten Schnittstellenmetallisierung ein Prozessgas verwendet wird, insbesondere während des Einbringens des Energieeintrags und/oder des weiteren Energieeintrags. Beispielsweise handelt es sich bei dem Prozessgas um Argon, Stickstoff und/oder Sauerstoff. Durch die Verwendung solcher Prozessgase ist es in vorteilhafter Weise möglich, in der ersten Aktivmetallschicht, der zweiten Aktivmetallschicht, der ersten Benetzungsmetallschicht und/oder der zweiten Benetzungsmetallschicht entsprechende Oxide und/oder Nitride auszugestalten. Diese erweisen sich als besonders vorteilhaft für ein Zwischenlagern, da sie einer Art Schutzschicht ausbilden.

Ein weiterer Gegenstand der vorliegenden Erfindung ist ein Metall-Keramik-Substrat hergestellt mit dem erfindungsgemäßen Verfahren. Alle für das Verfahren beschriebenen Vorteile und Merkmale lassen sich analog übertragen auf das Metall-Keramik-Substrat.

Weitere Vorteile und Merkmale ergeben sich aus der nachfolgenden Beschreibung bevorzugter Ausführungsformen des erfindungsgemäßen Gegenstands mit Bezug auf die beigefügten Figuren. Einzelne Merkmale der einzelnen Ausführungsformen können dabei im Rahmen der Erfindung miteinander kombiniert werden.

Es zeigt:
- **Fig.1:**: schematisch ein Metall-Keramik-Substrat gemäß einer ersten bevorzugten Ausführungsform der vorliegenden Erfindung,
- **Fig.2:**: schematisch ein Verfahren zur Herstellung eines Metall-Keramik-Substrats gemäß einer zweiten bevorzugten Ausführungsform der vorliegenden Erfindung und
- **Fig.3:**: schematisch ein Verfahren zur Herstellung eines Metall-Keramik-Substrats gemäß einer dritten bevorzugten Ausführungsform der vorliegenden Erfindung.

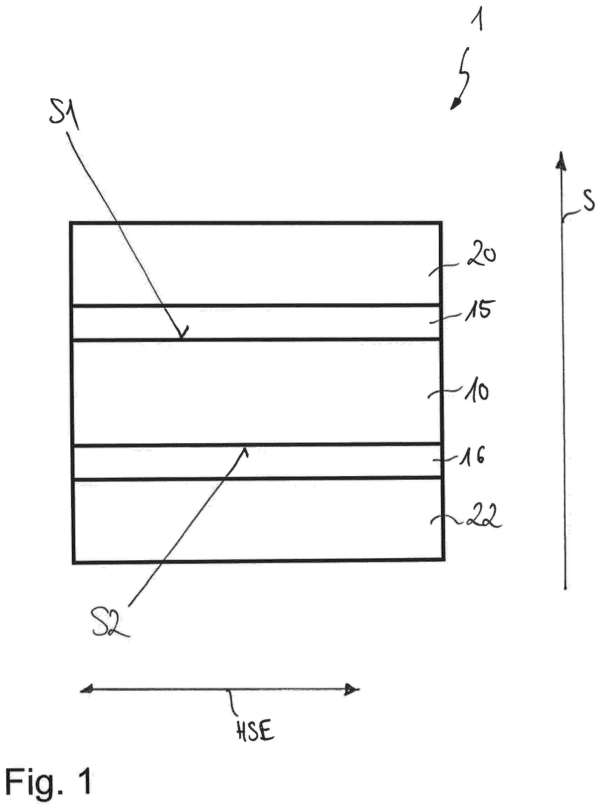

In **Figur 1** ist schematisch ein Metall-Keramik-Substrats 1 gemäß einer ersten bevorzugten Ausführungsform der vorliegenden Erfindung dargestellt. Solch ein Metall-Keramik-Substrat 1 dient vorzugsweise jeweils als Halteelementelement von elektronischen bzw. elektrischen Bauteile, die an das Metall-Keramik-Substrat 1 anbindbar sind, d. h. als Leiterplatte bzw. PCB (printed circuit board). Wesentliche Bestandteile eines solchen Metall-Keramik-Substrats 1 sind ein sich entlang einer Haupterstreckungsebene HSE erstreckendes Keramikelement 10 und eine an das Keramikelement 10 angebundene mindestens eine erste Metallschicht 20 und mindestens eine der mindestens einen ersten Metallschicht 20 gegenüberliegende zweite Metallschicht 22. Das Keramikelement 10 ist aus mindestens einem eine Keramik umfassenden Material gefertigt. Beispielsweise handelt es sich bei dem Keramikelement 10 um eine Keramikschicht, insbesondere eine einzelne Keramikschicht, oder um eine Verbundstruktur, in die beispielsweise eine Keramikschicht integriert ist. Die mindestens eine erste Metallschicht 20, die mindestens eine zweite Metallschicht 22 und das Keramikelement 10 sind dabei entlang einer senkrecht zur Haupterstreckungsebene HSE verlaufenden Stapelrichtung S übereinander angeordnet und in einem gefertigten Zustand über eine Anbindungsfläche zumindest bereichsweise miteinander stoffschlüssig verbunden. Vorzugsweise wird die mindestens eine erste Metallschicht 20 dann zur Bildung von Leiterbahnen oder Anbindungsstellen für die elektrischen Bauteile strukturiert. Beispielsweise wird diese Strukturierung in die mindestens eine erste Metallschicht 20 eingeätzt. Im Vorfeld muss allerdings eine dauerhafte Bindung, insbesondere stoffschlüssige Anbindung, zwischen der mindestens einen ersten Metallschicht 20 und der mindestens einen Keramikschicht 10 gebildet werden. Die mindestens eine zweite Metallschicht 22 ist vorzugsweise als Kühlelement vorgesehen. Beispielsweise handelt es sich dabei um einen massiven Metallblock oder um einen mit Kühlfinnen ausgestatte Kühlstruktur oder ein Kühlkanalsystem, das sich innerhalb der mindestens einen zweiten Metallschicht 22 erstreckt.

Um die mindestens eine erste Metallschicht 20 bzw. die mindestens eine zweite Metallschicht 22 dauerhaft an die mindestens ein Keramikelement 10 anzubinden, umfasst eine Anlage zur Herstellung des Metall-Keramik-Substrats 1, beispielsweise in einem DCB oder DAB - Anbindungsverfahren oder Aktivlötverfahren (AMB-Verfahren), einen Ofen, in dem ein gestapelte Anordnung aus dem Keramikelement 10 und der mindestens einer Metallschicht 20 erhitzt wird und so die Bindung erzielt wird.

Insbesondere handelt es sich bei dem in Figur 1 dargestellten Ausführungsbeispiel des Metall-Keramik-Substrats 1 um ein solches Metall-Keramik-Substrat 1, dessen mindestens eine erste Metallschicht 20 sich von der mindestens einen zweiten Metallschicht 22 unterscheidet, insbesondere in Hinblick auf ein verwendetes Metallmaterial. Beispielsweise handelt es sich bei der mindestens einen ersten Metallschicht 20 um eine Kupferschicht und bei der mindestens einen zweiten Metallschicht 22 um eine Aluminiumschicht. Dabei ist es vorgesehen, dass die mindestens eine erste Metallschicht 20 über eine erste Schnittstellenmetallisierung 15 an einer ersten Seite S1 des mindestens einen Keramikelements 10 angebunden ist, während die mindestens eine zweite Metallschicht 22 über eine zweite Schnittstellenmetallisierung 16 auf einer der ersten Seite S1 des mindestens einem Keramikelements 10 gegenüberliegenden zweiten Seite S2 des mindestens einem Keramikelements 10 angebunden ist. Mit anderen Worten: Vorzugsweise ist es vorgesehen, dass die mindestens eine erste Metallschicht 20 und/oder die mindestens eine zweite Metallschicht 22 nicht unmittelbar und direkt an das mindestens eine Keramikelement 10 angebunden ist, sondern über eine als Adapter wirkende erste Schnittstellenmetallisierung 15 bzw. zweite Schnittstellenmetallisierung 16. Durch die Verwendung einer ersten Schnittstellenmetallisierung 15 und/oder zweiten Schnittstellenmetallisierung 16 ist es in vorteilhafter Weise möglich, Lotmaterialien 35 zu verwenden, deren Arbeitsbereich vorzugsweise unterhalb von 650 °C liegen. Insbesondere ist es vorstellbar, dass die Nutzung einer ersten Schnittstellenmetallisierung 15 und/oder einer zweiten Schnittstellenmetallisierung 16 es ermöglicht, dass dasselbe Lötmaterial 35 für die Anbindung der mindestens einen ersten Metallschicht 20 und der mindestens einen zweiten Metallschicht 22 verwendet werden kann.

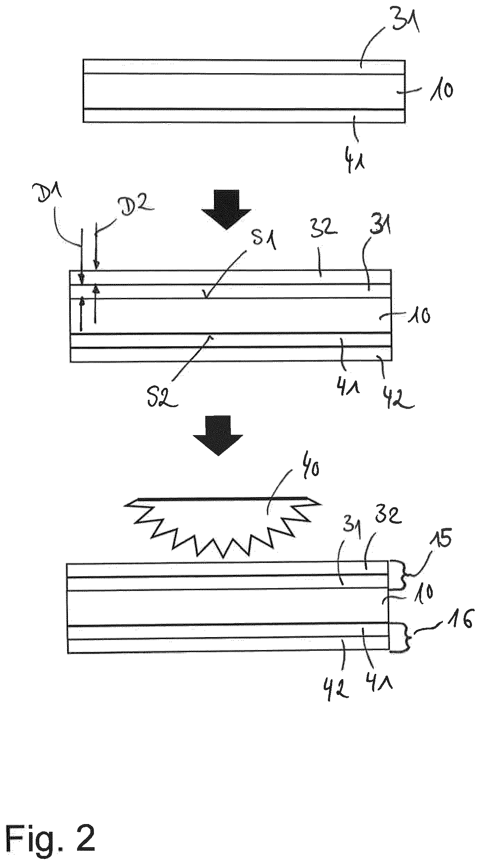

In **Figur 2** ist ein Verfahren zur Herstellung eines Metall-Keramik-Substrats 1 gemäß einer ersten vorliegenden Erfindung dargestellt. Insbesondere handelt es sich bei der in Figur 2 dargestellten Darstellung um die Illustration von Präparationsschritten zur Ausbildung einer ersten Schnittstellenmetallisierung 15 und/oder einer zweiten Schnittstellenmetallisierung 16. Weiterhin ist es bevorzugt vorgesehen, dass die erste Schnittstellenmetallisierung 15 eine erste Aktivmetallschicht 31 und eine erste Benetzungsmetallschicht 32 aufweist, während die zweite Schnittstellenmetallisierung 16 eine zweite Aktivmetallschicht 41 und eine zweite Benetzungsmetallschicht 42 umfasst. Dabei ist es bevorzugt vorgesehen, dass die Aktivmetallschichten, d. h. die erste Aktivmetallschicht 31 und die zweite Aktivmetallschicht 41, eine erste Dicke D1 aufweisen, die erste Benetzungsmetallschicht 32 und die zweite Benetzungsmetallschicht 42 eine zweite Dicke D2 aufweisen und die mindestens erste Metallschicht und die mindestens zweite Metallschicht jeweils eine dritte Dicke D3 aufweisen, wobei ein Verhältnis einer Summe der ersten Dicke D1 und zweiten Dicke D2 zu einer dritten Dicke D3 kleiner ist als ein Wert von 0,5, bevorzugt kleiner als 0,1 und besonders bevorzugt kleiner als 0,05. Mit anderen Worten: Es wird eine vergleichsweise dünne erste Schnittstellenmetallisierung 15 und/oder zweite Schnittstellenmetallisierung 16 bereitgestellt.

Dabei ist es insbesondere vorgesehen, dass nach einem Bereitstellen des Keramikelements 10 an einer Oberseite bzw. an einer ersten Seite S1 des Keramikelements 10 durch ein primäres Anordnen eine erste Aktivmetallschicht 31 und an einer der ersten Seite S1 gegenüberliegenden zweiten Seite S2 des Keramikelements 10 eine zweite Aktivmetallschicht 41 angeordnet wird. Vorzugsweise wird im Rahmen des primären Anordnens die erste bzw. zweite Aktivmetallschicht 31, 41 durch ein Abscheideverfahren, beispielsweise ein Sputtern, auf die erste Seite S1 oder die zweite Seite S2 aufgetragen. Anschließend ist es vorgesehen, dass auf die erste Aktivmetallschicht 31 eine erste Benetzungsmetallschicht 32 angeordnet und eine zweite Benetzungsmetallschicht 42 auf die zweite Aktivmetallschicht 41 aufgebracht wird, vorzugsweise durch ein Abscheideverfahren, wie beispielsweise ein Sputtern.

Zur stoffschlüssigen Verbindung des Zweischichtsystems aus erster Aktivmetallschicht 31 und erster Benetzungsmetallschicht 32 bzw. zweiter Aktivmetallschicht 41 und zweiter Benetzungsmetallschicht 42 ist es bevorzugt vorgesehen, dass das Schichtsystem aus erster Aktivmetallschicht 31 und erster Benetzungsmetallschicht 32 bzw. zweiter Aktivmetallschicht 41 und zweiter Benetzungsmetallschicht 42 einem Energieeintrag 40 ausgesetzt wird. Beispielsweise erfolgt der Energieeintrag 40 dabei mittels Licht, beispielsweise Laserlicht bzw. gepulstem Laserlicht oder in Form eines Lichtblitzes, der dazu ausgelegt ist, die erste bzw. zweite Aktivmetallschicht 31, 41 und die erste bzw. zweite Benetzungsmetallschicht 32, 42 aufzuschmelzen und dabei eine stoffschlüssige Verbindung durch Reaktion zwischen der ersten Seite S1 und/oder der zweiten Seite S2 des Keramikelements 10 mit der ersten bzw. zweiten Aktivmetallschicht 31, 41 zu veranlassen. Insbesondere erfolgt eine entsprechende Ausbildung der ersten und/oder zweiten Schnittstellenmetallisierung 15, 16 im Rahmen eines Flashlight-Annealings. Dabei handelt es sich um einen Lichtblitz mit einer Pulsdauer zwischen 0,2 und 20 ms der zum Energieeintrag bis zu 20 J/cm² oder 100 J/cm² führt. Insbesondere ist es vorgesehen, dass die erste Schnittstellenmetallisierung 15 und/oder die zweite Schnittstellenmetallisierung 16 sich über mehr als 50%, bevorzugt mehr als 70% und besonders bevorzugt mehr als 80% der Fläche der ersten Seite S1 bzw. der zweiten Seite S2 erstreckt.

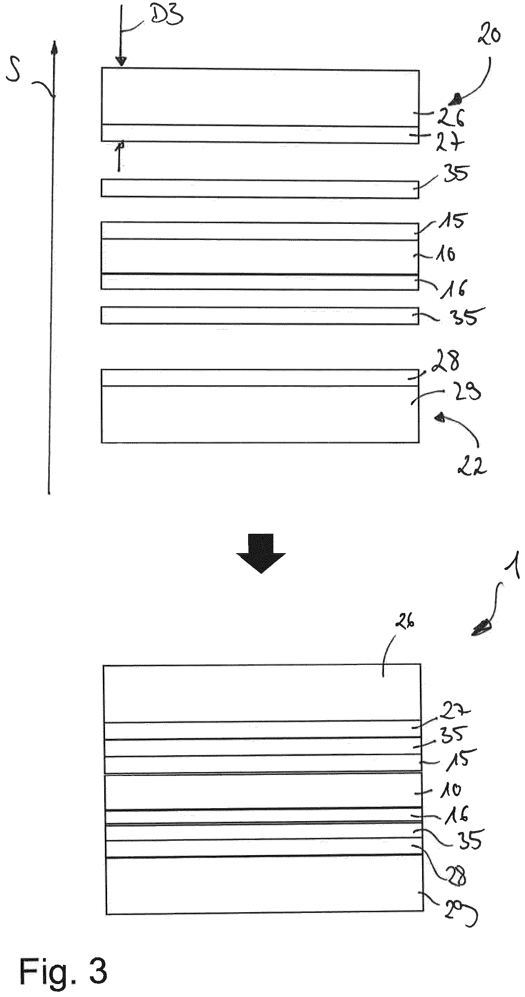

In **Figur 3** ist ein Verfahren zur Herstellung eines Metall-Keramik-Substrats 1 gemäß einer zweiten beispielhaften Ausführungsform der vorliegenden Erfindung dargestellt. Insbesondere ist es vorgesehen, dass die in Figur 3 illustrierten Verfahrensschritte sich an die Präparationsschritte anschließen, die in Figur 2 gezeigt sind. Dabei ist es insbesondere vorgesehen, dass ein Lotmaterial 35, vorzugsweise in Form einer Lötfolie und/oder einer Lötpaste, auf die ausgebildete erste Schnittstellenmetallisierung 15 und/oder zweite Schnittstellenmetallisierung 16 aufgebracht wird und insbesondere zwischen der ersten Schnittstellenmetallisierung 15 und der mindestens einen ersten Metallisierung 20 bzw. zwischen der zweiten Schnittstellenmetallisierung 16 und der mindestens einen zweiten Metallschicht 22 angeordnet wird. Dabei ist es vorstellbar, dass die Lotmaterialien 35 einander entsprechen und/oder sich voneinander unterscheiden. Weiterhin ist es bevorzugt vorgesehen, dass es sich bei der mindestens einen ersten Metallschicht 20 und/oder mindestens zweiten Metallschicht 22 um eine Hybridstruktur handelt. Beispielsweise umfasst die mindestens eine erste Metallschicht 20 einen ersten Teilabschnitt 26 und einen zweiten Teilabschnitt 27, wobei beispielsweise der erste Teilabschnitt 26 ein erstes Metall aufweist und der zweite Teilabschnitt 27 eine Metalllegierung auf Basis des Metalls des ersten Teilabschnitts 26 umfasst. Vorzugsweise ist dabei der zweite Teilabschnitt 27 um einen Faktor 5 dünner als der erste Teilabschnitt 26. Vorzugsweise dient die Ausbildung des zweiten Teilabschnitts 27 zum Bereitstellen einer Metalllegierung, die insbesondere unterhalb einer Temperatur von 650 °C schmelzbar ist, um so im Rahmen des Lötprozesses ein Anschmelzen der mindestens einen ersten Metallschicht 20 zu veranlassen, was schließlich zur stoffschlüssigen Verbindung zwischen der mindestens einen ersten Metallschicht 20 und der ersten Schnittstellenmetallisierung 15 über das Lotmaterial 35 beiträgt. Besonders bevorzugt ist es beispielsweise vorgesehen, dass der erste Teilabschnitt 26 aus Kupfer ist und/oder der zweite Teilabschnitt 27 eine niedrigschmelzende Kupferlegierung.

Ferner ist es vorgesehen, dass die mindestens eine zweite Metallschicht 22 einen ersten Teilabschnitt 29 und einen zweiten Teilabschnitt 28 umfasst, wobei der erste Teilabschnitt 29 und der zweite Teilabschnitt 28 der mindestens einen zweiten Metallschicht 22 vorzugsweise im Rahmen eines Plattierens, beispielsweise eines Walzplattierens erzeugt wurden. Beispielsweise handelt es sich bei dem ersten Teilabschnitt 29 um einen Aluminiumkörper bzw. Grundkörper an dessen der zweiten Seite S2 des Keramikelements 10 zugewandten Seite der zweite Teilabschnitt 28 angeordnet ist. Dieser zweite Teilabschnitt 28 ist beispielsweise aus AlSi. Insbesondere ist es vorgesehen, dass der erste Teilabschnitt 29 der mindestens einen zweiten Metallschicht 22 mindestens um einen Faktor 5 dicker ist als der zweite Teilabschnitt 28 der mindestens einen zweiten Metallschicht 22. Im Anschluss an das Zusammensetzen der mindestens einen ersten Metallschicht 20, der mindestens einen zweiten Metallschicht 22, der Lotmaterialien 35 und des mit der ersten Schnittstellenmetallisierung 15 und der zweiten Schnittstetallisierung 16 versehenen Keramikelement 10 werden die entlang einer Stapelrichtung S übereinander angebrachten Elemente des Assembles in einem gemeinsamen Lötprozess, vorzugsweise bei einer Temperatur unterhalb von 650 °C miteinander verbunden.

Im Anschluss an das stoffschlüssige Verbinden der mindestens einen ersten Metallschicht 20 an der ersten Seite S1 des Keramikelements 10 und der mindestens einen zweiten Metallschicht 22 an der zweiten Seite S2 des Keramikelements 10 ist es vorgesehen, bevorzugt in einem mehrstufigen Ätzschritt, die mindestens eine erste Metallschicht 20 und/oder die mindestens eine zweite Metallschicht 22 zu strukturieren. Hierzu wird eine Maskierung vorgenommen und anhand der Maskierung erfolgt der vorzugsweise mehrstufige Ätzschritt. Dadurch lassen sich beispielsweise Isolationsgräben in die mindestens eine erste Metallschicht 20 und/ oder andersartige Strukturierungen in die mindestens eine zweite Metallschicht 22 einbringen. Weiterhin ist es bevorzugt vorgesehen, dass im Anschluss an die Strukturierung eine Laserbehandlung, vorzugsweise zwecks einer Vereinzelung der einzelnen Metall-Keramik-Substraten vorgenommen wird, bevor schließlich eine Oberflächenbehandlung stattfindet.

### Bezugszeichenliste:

- 1: Metall-Keramik-Substrat
- 10: Keramikelement
- 15: erste Schnittstellenmetallisierung
- 16: zweite Schnittstellenmetallisierung
- 20: erste Metallschicht
- 26: erster Teilabschnitt der ersten Metallschicht
- 27: zweiter Teilabschnitt der ersten Metallschicht
- 28: zweiter Teilabschnitt der zweiten Metallschicht
- 29: erster Teilabschnitt der zweiten Metallschicht
- 22: zweite Metallschicht
- 31: Aktivmetallschicht
- 32: Benetzungsmetallschicht
- 35: Lotmaterial
- 40: Energieeintrag
- HSE: Haupterstreckungsebene
- S: Stapelrichtung
- D1: erste Dicke
- D2: zweite Dicke
- D3: dritte Dicke
- S1: erste Seite
- S2: zweite Seite

## Patentansprüche

1. Verfahren zur Herstellung eines Metall-Keramik-Substrats (1), bei dem mindestens eine erste Metallschicht (20), ein Keramikelement (10) und mindestens eine zweite Metallschicht (22) entlang einer Stapelrichtung (S) übereinander angeordnet sind, wobei das Keramikelement (20) in Stapelrichtung (S) zwischen der mindestens einen ersten Metallschicht (20) und der mindestens einen zweiten Metallschicht (22) angeordnet ist und wobei sich die mindestens eine erste Metallschicht (20) von der mindestens einen zweiten Metallschicht (22) in Hinblick auf ihre Metallmaterialien, unterscheidet, umfassend:
- Bereitstellen des Keramikelements (10);
- Ausbilden einer ersten Schnittstellenmetallisierung (15) auf einer ersten Seite (S1) des Keramikelements (10), wobei die erste Schnittstellenmetallisierung (15) eine erste Aktivmetallschicht (31) und eine erste Benetzungsmetallschicht (32) umfasst,
- Ausbilden einer zweiten Schnittstellenmetallisierung (16) auf einer der ersten Seite (S1) des Keramikelements (10) gegenüberliegenden, zweiten Seite (S2) des Keramikelements (10), wobei die zweite Schnittstellenmetallisierung (16) eine zweite Aktivmetallschicht (41) und eine zweite Benetzungsmetallschicht (42) umfasst,
- Anbinden der mindestens einen ersten Metallschicht (20) an die erste Schnittstellenmetallisierung (15), insbesondere mittels eines Aktivlötverfahrens, zur Ausbildung des Metall-Keramik-Substrats (1), und
- Anbinden der mindestens einen zweiten Metallschicht (22) an die zweite Schnittstellenmetallisierung (16), insbesondere mittels eines Aktivlötverfahrens,
wobei die erste Schnittstellenmetallisierung (15) und/oder die zweite Schnittstellenmetallisierung (16) einem Energieeintrag (40) ausgesetzt wird, insbesondere zeitlich vor dem Anbinden der mindestens einen ersten Metallschicht (20) an die erste Schnittstellenmetallisierung (15) und/oder der mindestens einen zweiten Metallschicht (22) an die zweite Schnittstellenmetallisierung (16).

2. Verfahren gemäß Anspruch 1, wobei das Anbinden der mindestens einen ersten Metallschicht (20) und das Anbinden der mindestens einen zweiten Metallschicht (22) zeitgleich durchgeführt wird.

3. Verfahren gemäß einem der vorhergehenden Ansprüche, wobei das Anbinden der mindestens einen ersten Metallschicht (20) und der mindestens einen zweiten Metallschicht (22) unterhalb einer Löttemperatur von 800 °C, bevorzugt unterhalb von 700 °C und besonders bevorzugt unterhalb von 650 °C durchgeführt wird.

4. Verfahren gemäß einem der vorhergehenden Ansprüche, wobei die mindesten eine erste Metallschicht (20) und/oder die mindestens eine zweite Metallschicht (22)
eine Hybridstruktur und/oder eine Oberflächenmodifikation aufweist.

5. Verfahren gemäß einem der vorhergehenden Ansprüche, wobei
- ein zumindest abschnittsweise primäres Anordnen der ersten Aktivmetallschicht (31) und/oder der zweiten Aktivmetallschicht (41) und/oder
- ein zumindest abschnittsweise sekundäres Anordnen der ersten Benetzungsmetallschicht (32) auf der Aktivmetallschicht (31) und/oder der zweiten Benetzungsmetallschicht (42) auf der zweiten Aktivmetallschicht (42) mittels eines Abscheideverfahrens durchgeführt wird
wobei zwischen dem primären Anordnen und dem sekundären Anordnen die erste Aktivmetallschicht (31) und/oder die zweite Aktivmetallschicht (41) einem weiteren Energieeintrag ausgesetzt wird.

6. Verfahren gemäß einem der vorhergehenden Ansprüche, wobei als Energieeintrag (40) und/oder weiterer Energieeintrag Licht verwendet wird.

7. Verfahren gemäß Anspruch 6, wobei ein Lichtblitz verwendet wird, wobei der Energieeintrag (40) des Lichtblitzes auf die erste Aktivmetallschicht (31), die zweite Aktivmetallschicht (41), die erste Benetzungsmetallschicht (32) und/oder die zweite Benetzungsmetallschicht (42) vorzugsweise mindestens 5 kW, bevorzugt mindestens 8 kW und besonders bevorzugt zwischen 10 und 15 kW beträgt.

8. Verfahren gemäß einem der vorhergehenden Ansprüche, wobei die erste Aktivmetallschicht (31) eine erste Dicke (D1) und die erste Benetzungsmetallschicht (32) eine zweite Dicke (D2) aufweist, wobei die erste Dicke (D1) und/oder die zweite Dicke (D2) einen Wert zwischen 0 nm und 5000 nm, bevorzugt zwischen 50 nm und 2500 nm uns besonders bevorzugt zwischen 100 nm und 1000 nm annimmt.

9. Verfahren gemäß einem der vorhergehenden Ansprüche, wobei zur Ausbildung der ersten Schnittstellenmetallisierung (15) und/oder der zweiten Schnittstellenmetallisierung (16) ein Prozessgas verwendet wird.

10. Metall-Keramik-Substrat (1) hergestellt mit einem Verfahren gemäß einem der vorhergehenden Ansprüche.

## Claims

1. Method for producing a metal-ceramic substrate (1), in which at least one first metal layer (20), a ceramic element (10) and at least one second metal layer (22) are arranged on top of one another along a stacking direction (S), wherein the ceramic element (20) is arranged in the stacking direction (S) between the at least one first metal layer (20) and the at least one second metal layer (22) and wherein the at least one first metal layer (20) differs from the at least one second metal layer (22) with respect to their metal materials, comprising:
- providing the ceramic element (10);
- forming a first interface metallization (15) on a first side (S1) of the ceramic element (10), wherein the first interface metallization (15) comprises a first active metal layer (31) and a first wetting metal layer (32),
- forming a second interface metallization (16) on a second side (S2) of the ceramic element (10) opposite to the first side (S1) of the ceramic element (10), wherein the second interface metallization (16) comprises a second active metal layer (41) and a second wetting metal layer (42),
- bonding of the at least one first metal layer (20) to the first interface metallization (15), in particular by means of an active soldering method, in order to form the metal-ceramic substrate (1), and
- bonding of the at least one second metal layer (22) to the second interface metallization (16), in particular by means of an active soldering method,
wherein the first interface metallization (15) and/or the second interface metallization (16) is exposed to an energy input (40), in particular temporally before the bonding of the at least one first metal layer (20) to the first interface metallization (15) and/or the at least one second metal layer (22) to the second interface metallization (16).

2. Method according to claim 1, wherein the bonding of the at least one first metal layer (20) and the bonding of the at least one second metal layer (22) are performed simultaneously.

3. Method according to one of the preceding claims, wherein the bonding of the at least one first metal layer (20) and the at least one second metal layer (22) is performed below a soldering temperature of 800°C, preferably below 700°C and particularly preferably below 650°C.

4. Method according to one of the preceding claims, wherein the at least one first metal layer (20) and/or the at least one second metal layer (22) has a hybrid structure and/or a surface modification.

5. Method according to one of the preceding claims, wherein
- at least partially primary arranging of the first active metal layer (31) and/or the second active metal layer (41) and/or
- at least partially secondary arranging of the first wetting metal layer (32) on the active metal layer (31) and/or the second wetting metal layer (42) on the second active metal layer (42)
is performed by means of a deposition method
wherein, between the primary arranging and the secondary arranging, the first active metal layer (31) and/or the second active metal layer (41) is exposed to a further energy input.

6. Method according to one of the preceding claims, wherein light is used as energy input (40) and/or further energy input.

7. Method according to claim 6, wherein a flash of light is used, wherein the energy input (40) of the flash of light onto the first active metal layer (31), the second active metal layer (41), the first wetting metal layer (32) and/or the second wetting metal layer (42) is preferably at least 5 kW, more preferably at least 8 kW and particularly preferably between 10 and 15 kW.

8. Method according to one of the preceding claims, wherein the first active metal layer (31) has a first thickness (D1) and the first wetting metal layer (32) has a second thickness (D2), wherein the first thickness (D1) and/or the second thickness (D2) has a value between 0 nm and 5000 nm, more preferably between 50 nm and 2500 nm and particularly preferably between 100 nm and 1000 nm.

9. Method according to one of the preceding claims, wherein a process gas is used in order to form the first interface metallization (15) and/or the second interface metallization (16).

10. Metal-ceramic substrate (1) manufactured by a method according to one of the preceding claims.

## Revendications

1. Procédé de fabrication d'un substrat métal-céramique (1), dans lequel
au moins une première couche métallique (20), un élément céramique (10) et au moins une deuxième couche métallique (22) sont superposés le long d'une direction d'empilement (S),
l'élément céramique (10) est disposé entre ladite au moins une première couche métallique (20) et ladite au moins une deuxième couche métallique (22) dans la direction d'empilement (S), et
ladite au moins une première couche métallique (20) se distingue de ladite au moins une deuxième couche métallique (22) en ce qui concerne leurs matériaux métalliques,
consistant à :
- fournir l'élément céramique (10) ;
- former une première métallisation d'interface (15) sur une première face (S1) de l'élément céramique (10), la première métallisation d'interface (15) comprenant une première couche de métal actif (31) et une première couche de métal mouillant (32),
- former une deuxième métallisation d'interface (16) sur une deuxième face (S2) de l'élément céramique (10) opposée à la première face (S1) de l'élément céramique (10), la deuxième métallisation d'interface (16) comprenant une deuxième couche de métal actif (41) et une deuxième couche de métal mouillant (42),
- lier ladite au moins une première couche métallique (20) à la première métallisation d'interface (15), en particulier par un procédé de brasage actif, pour former le substrat métal-céramique (1), et
- lier ladite au moins une deuxième couche métallique (22) à la deuxième métallisation d'interface (16), en particulier par un procédé de brasage actif,
la première métallisation d'interface (15) et/ou la deuxième métallisation d'interface (16) étant exposées à un apport d'énergie (40), en particulier temporellement avant la liaison de ladite au moins une première couche métallique (20) à la première métallisation d'interface (15) et/ou de ladite au moins une deuxième couche métallique (22) à la deuxième métallisation d'interface (16).

2. Procédé selon la revendication 1,
dans lequel la liaison de ladite au moins une première couche métallique (20) et la liaison de ladite au moins une deuxième couche métallique (22) sont effectuées simultanément.

3. Procédé selon l'une des revendications précédentes,
dans lequel la liaison de ladite au moins une première couche métallique (20) et de ladite au moins une deuxième couche métallique (22) est réalisée en dessous d'une température de brasage de 800 °C, de préférence en dessous de 700 °C et de manière particulièrement préférée en dessous de 650 °C.

4. Procédé selon l'une des revendications précédentes,
dans lequel ladite au moins une première couche métallique (20) et/ou ladite au moins une deuxième couche métallique (22) présente(nt) une structure hybride et/ou une modification de surface.

5. Procédé selon l'une des revendications précédentes, dans lequel
- il est prévu un agencement au moins localement primaire de la première couche de métal actif (31) et/ou de la deuxième couche de métal actif (41), et/ou
- il est prévu un agencement au moins localement secondaire de la première couche de métal mouillant (32) sur la couche de métal actif (31) et/ou de la deuxième couche de métal mouillant (42) sur la deuxième couche de métal actif (42)
par un procédé de dépôt,
entre l'agencement primaire et l'agencement secondaire, la première couche de métal actif (31) et/ou la deuxième couche de métal actif (41) est exposée à un apport d'énergie supplémentaire.

6. Procédé selon l'une des revendications précédentes,
dans lequel on utilise de la lumière comme apport d'énergie (40) et/ou comme apport d'énergie supplémentaire.

7. Procédé selon la revendication 6,
dans lequel on utilise un flash lumineux, l'apport d'énergie (40) du flash lumineux sur la première couche de métal actif (31), la deuxième couche de métal actif (41), la première couche de métal mouillant (32) et/ou la deuxième couche de métal mouillant (42) étant de préférence d'au moins 5 kW, de préférence d'au moins 8 kW et de manière particulièrement préférée entre 10 et 15 kW.

8. Procédé selon l'une des revendications précédentes,
dans lequel la première couche de métal actif (31) présente une première épaisseur (D1) et la première couche de métal mouillant (32) présente une deuxième épaisseur (D2), la première épaisseur (D1) et/ou la deuxième épaisseur (D2) prenant une valeur comprise entre 0 nm et 5000 nm, de préférence entre 50 nm et 2500 nm et de manière particulièrement préférée entre 100 nm et 1000 nm.

9. Procédé selon l'une des revendications précédentes,
dans lequel on utilise un gaz de traitement pour former la première métallisation d'interface (15) et/ou la deuxième métallisation d'interface (16).

10. Substrat métal-céramique (1) fabriqué par un procédé selon l'une des revendications précédentes.
